# EUROPEAN PATENT APPLICATION

(11) **EP 1 724 136 A1**
(43) Date of publication of application: **22.11.2006**
(21) Application number: 06380089.0
(22) Date of filing: 20.04.2006
(51) Int. Cl.: B60H 1/34

(54) **Ventilator system with front provided with battens**

(30) Priority: 25.04.2005 ES 200500990
(71) Applicant: Maier, S. Coop., 48300 Gernika (ES)
(72) Inventor: Mandaluniz Bilbao, Joseba, 48300 Gernika (ES)
(74) Representative: Urteaga Simarro, José Antonio

(57) **Abstract**

Vehicle ventilator system (1) that comprises a front (3) and a ventilator (2) provided with slats (5), wherein the slats (5) have the appearance of being decorated in the same way as the front (3) without it actually being necessary to decorate the slats (5). To achieve this, the front (3) is provided with a series of battens (4) disposed in such a way that they cover the part (6) of the slats (5) most visible from the vehicle passenger compartment. These battens (4) form an integral part of the front (3) of the ventilator system (1) and can be decorated in exactly the same way as the front (3) itself.

## Description

### Technical field

The invention relates to a ventilator of the type used in a motor vehicle ventilation system as air vents through which air can be introduced into the vehicle passenger compartment in a variable direction and strength.

### Prior art

Ventilators are devices that act as air vents in a motor vehicle ventilation system. They are generally installed at the sides of the dashboard or on the fascia, upon which elements are fitted such as the air-conditioning system controls, the radio controls or controls for operating in general some of the vehicle's functions and even the ventilator itself. They can also be found in other areas of the vehicle passenger compartment other than the dashboard and fascia, such as the rear of the central consoles in top-of-the-range vehicles.

Traditionally, ventilators must meet a series of functional requirements such as enabling the regulation of the direction of the air emitted towards the vehicle passenger compartment. For this purpose the ventilators are generally provided with a series of slats or substantially flat pieces whose function it is to direct the air vent in a certain direction. Ventilators also include one or more external controls, accessible from the passenger compartment, to enable a user to regulate said direction. The ventilator slats can be disposed in a horizontal or vertical direction and/or according to any other geometrical disposition.

The prior art contains multiple types of ventilators. Document US5947813A1 is an example of a first type of ventilator provided with slats wherein the unit of outermost slats forms a single piece, and wherein the operating of the external controls causes the movement of said unit of slats in relation to an axis of rotation. In addition, a second type of ventilator is known wherein the slats are independent pieces that rotate in relation to different axes of rotation (with said axes of rotation able to form an intrinsic part of the body of the ventilator or of the front). In this second type of ventilator, the rotation of the slats that are disposed in a single direction (horizontal, vertical or other) is generally unified or synchronised by bars. An example of this second type of ventilator can be seen in document US20030022615A1, which describes a ventilator provided with a series of horizontal and vertical slats that rotate in relation to the rest of the ventilator and the front. Another example of this second type of ventilator can be seen in document GB2129119A, which describes a ventilator provided with straight slats that, unlike the aforementioned document US20030022615A1, project out towards the exterior of the front of the ventilator in certain circumstances. An additional example of this second type of ventilator can be found in the documents DE20105645U1 and EP0754580B1, which describe ventilators with moving slats that, unlike the aforementioned two examples GB2129119A and US20030022615A1, present an arched or non-straight form to give the ventilator a spherical appearance on the exterior.

Aesthetic requirements have now been added to the functional requirements taken into account in designing ventilators with the objective that the ventilators become less visible, i.e. more integrated and in aesthetic and tactile continuity with the front. Specifically, the most common practice is to decorate the part of the slats that is most visible from the passenger compartment with the necessary means so that the final finish is as similar as possible as that of the front. Therefore, the slats and, by extension, the ventilator appear to form part of the front itself, and there is no aesthetic and/or tactile discontinuity between the front and the ventilator. The decoration usually used is a paint, chrome, etc.

The painting, chroming or other decoratiing procedure of the slats once they have been formed is complex and costly, as the slats are decorated before being fitted into the ventilator, and must, therefore, be handled and decorated either one by one or in clusters or groups, with the subsequent complication and slowing down of the procedure in either of the two cases.

Additionally, in practice the slats are manufactured using materials that must meet fundamentally structural requirements and which do not behave well during decoration processes (particularly during painting processes using "soft touch" paints to produce a slightly rubbery tactile finish). The fact that materials not designed to be subjected to decorative processes are used also complicates the process of obtaining a finish on the slats similar to that of the front of the ventilator and makes this process more expensive.

### Brief description of the invention

It is an object of this invention to provide a ventilator system in which there is an aesthetic and/or tactile continuity between, on the one hand, the outermost or most visible air-directing slats from the vehicle passenger compartment and, on the other, the front or area that is visible from the vehicle passenger compartment, wherein said ventilator system creates the appearance that the slats are decorated in the same way as the front without it being necessary to decorate the slats once formed. This means to say that by means of the invention it is not necessary to paint or chrome the most visible part of the slats in order to obtain aesthetic continuity. In this way, the decoration of the slats can be reduced to an optional process of batch colouring, in which prior to forming the slats dyes are added to the materials in order to give them a certain colour or appearance. The process of batch colouring is not problematic or expensive, as it is a process that is performed on the base material before it is processed and not on pre-formed pieces.

For this purpose, the front is provided with a series of battens disposed essentially parallel to the outermost slats or with the same geometric layout as that of the slats and designed to cover part of the slats (specifically, at least the area of the outermost slats that is most visible from the passenger compartment). These battens form an integral part of the front of the ventilator system and can be decorated at the same time as the front itself, which means that it is not necessary to decorate the slats of the ventilator system in order to obtain aesthetic continuity between the ventilator system and the front.

The results obtained with regard to aesthetic and tactile continuity by the ventilator system according to the invention are significantly better than those obtained by decorating the slats with the intention of simulating the appearance of the front area surrounding the ventilator. It must be remembered that in the inventive ventilator system the battens are an integral part of a front designed in itself to be decorated and to present a finish of high quality, and made, therefore, with materials and processes that take aesthetic requirements into account. Furthermore, the finish of the battens can be exactly the same as the rest of the front as they form part of the same piece, something that is very expensive to achieve with the known techniques.

Consequently, whereas in ventilator systems known in the prior art the slats must be manufactured with more expensive materials capable of behaving satisfactorily in a decoration process as well as presenting structural qualities, the invention enables, in contrast, the manufacture of the slats with a thermoplastic material that does not have to meet aesthetic requirements, thereby reducing the cost of manufacturing the slats and the ventilator.

The application of the invention is envisaged in ventilators of all types except in ventilators in which the outermost slats form a single piece and move jointly in relation a single axis of rotation (the case of US5947813A1), in spherical ventilators (the case of DE20105645U1 and EP0754580B1) or in ventilators whose slats project out in a mobile form towards the exterior of the front (the case of GB2129119A).

### Brief description of the figures

Details of the invention can be seen in the accompanying non-limiting drawings:
- Figure 1 shows a cross-sectional perspective of an embodiment of the inventive ventilator system.
- Figure 2 shows a view in perspective of an embodiment of the inventive front.
- Figure 3 shows a view in perspective of another embodiment of the inventive front.
- Figure 4 shows a view in perspective of a ventilator system front of the type known in the prior art.

### Detailed description of the invention

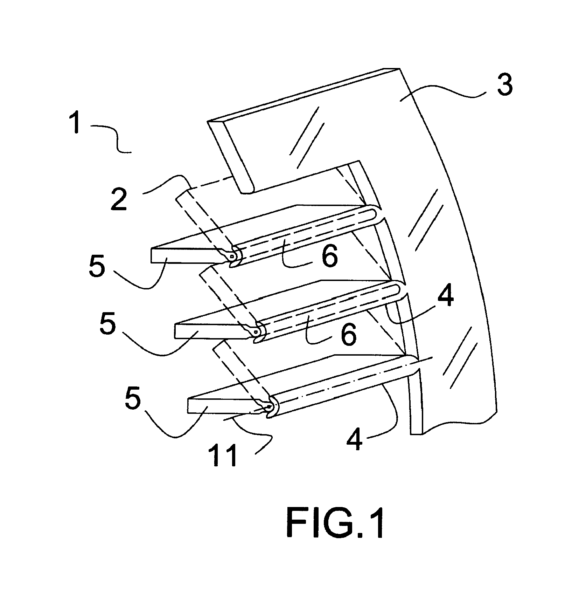

Figure 1 shows an embodiment of the inventive ventilator system (1). The ventilator system (1) comprises a front (3) and a ventilator (2) of which only the outermost slats (5), in this case horizontal, are represented. The ventilator (2) can comprise other elements such as vertical slats, controls regulating the inclination of the slats, walls, opening and closing panels, etc., none of them relevant in the explanation of the present invention. As can be seen in the figure, the slats (5) can be rotated in order to regulate the direction of the air exiting towards the vehicle passenger compartment, and the rotation of each slat (5) occurs around an axis of rotation (11).

The front (3) of the ventilator comprises a series of battens (4) disposed in the same way as the outermost slats (5) of the ventilator (2) so that said battens (4) conceal the most visible part (6) of the slats (5). The battens (4) are an integral part of the front (3) and are preferably decorated at the same time and in the same way as the rest of the front (3). In this way aesthetic continuity is achieved on the entire front (3) of the ventilator system (1), without the need to decorate the aforementioned most visible part (6) of the slats (5) in a way that imitates the finish of the front (3).

To ensure that the battens (4) of the front (3) affect the flow of air exiting from the ventilator (2) to the vehicle passenger compartment as little as possible, the battens (4) preferably have a form that is adapted as much as possible to the most visible part (6) of the slats (5). The form of the battens (4) must also allow the slats (5) to rotate adequately.

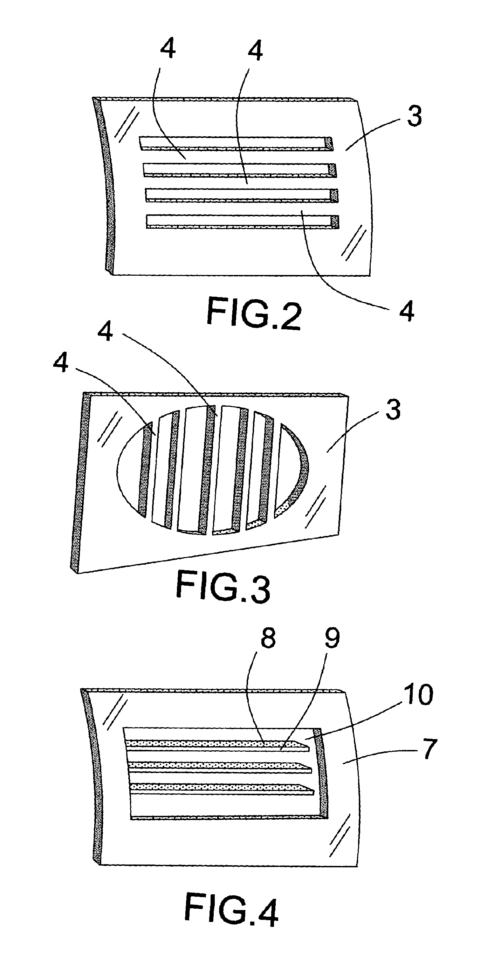

The concept of battens (4) covering the most visible part (6) of the slats (5) according to the invention is valid for Cartesian ventilators of any form. For example, Figure 2 shows an embodiment of the inventive front (3) in which the front (3) is provided with a series of horizontal battens (4). Figure 3 shows another embodiment of the inventive front (3) in which the front (3) is provided with a series of vertical battens (4). In addition, further embodiments of the inventive ventilation system (1) and the front (3) are contemplated, in which the battens (4) of the front (3) are neither horizontal nor vertical, but are oblique or present other geometric forms that can be adapted to more complex geometries of slats (5) in ventilators (2).

Figure 4 shows a ventilator system according to the prior art, in which the front (7) is decorated in a certain way, and the outermost slats (8) of the ventilator system can be seen in a hollow (10) formed in said front (7). The most visible part (9) of said slats (8) is decorated in a way that aims to imitate the finish of the front (7).

In the description of the present invention the front (3) is envisaged as part of the ventilator system (1) concept with the result that the ventilator system (1) comprises, on the one hand, a ventilator (2) provided with a series of slats (5) and, on the other, the aforementioned front (3) or part visible from the passenger compartment. In practice, the ventilator system (1) can present various embodiments: in a first embodiment the ventilator (2) and the front (3) of the ventilator can form part of a single product designed to be fitted onto the complete fascia of the vehicle passenger compartment; in a second embodiment the ventilator (2) and the front (3) of the ventilator can be separate products designed to be fitted onto the complete fascia of the vehicle passenger compartment; in a third embodiment the front (3) of the ventilator can be a part or an area of the complete fascia of the vehicle passenger compartment so that the ventilator (2) is fitted behind said part of the complete fascia. In any case, for the purposes of the present invention it is considered that the ventilator system (1) concept comprises the aforementioned part of the fascia or the front (3) of the ventilator as well as the ventilator (2) itself.

The invention can be applied to ventilator systems (1) in which the pieces or components that make up the axes of rotation (11) of the slats (5) form an integral part of the ventilator (2) or an integral part of the front (3) of the ventilator.

It should be pointed out that the invention can be applied to ventilator systems (1) whose outermost slats (5), i.e. those slats (5) whose most visible part (6) is covered by a batten (4), are mobile as well as fixed. For example, Figure 1 shows an embodiment of the ventilator system (1) in which the outermost slats (5) are mobile or capable of rotating around axes of rotation (11). Although they are not represented in the figures, other embodiments of the invention in which the outermost slats (5) are fixed slats, with other slats or components of the ventilation system (1) being mobile, would also be feasible.

Finally, the invention can be applied in central, lateral and rear ventilation systems (1) and, in general, in any ventilation system (1) situated in any area of the vehicle.

## Claims

1. Ventilator system (1) for the emission of air towards a passenger compartment, which comprises a front (3) and a ventilator (2) provided with a series of slats (5), wherein each slat (5) comprises a most visible part (6) or part closest to the passenger compartment, **characterised in that** the front (3) comprises at least one batten (4), where each batten (4) covers at least the most visible part (6) of at least one slat (5) substantially along all of said most visible part (6).

2. Ventilation system (1) for the emission of air towards a passenger compartment, in accordance with claim 1, **characterised in that** the battens (4) have a form that is adapted to the form of the most visible part (6) of the slats (5).

3. Ventilation system (1) for the emission of air towards a passenger compartment, in accordance with claim 1, **characterised in that** the battens (4) of the front (3) are decorated in the same way as the rest of the front (3).

4. Ventilation system (1) for the emission of air towards a passenger compartment, in accordance with claim 1, **characterised in that** the battens (4) are horizontal.

5. Ventilation system (1) for the emission of air towards a passenger compartment, in accordance with claim 1, **characterised in that** the battens (4) are vertical.

6. Ventilation system (1) for the emission of air towards a passenger compartment, in accordance with claim 1, **characterised in that** the battens (4) are neither horizontal nor vertical.

7. Front (3) for a ventilator (2) for the emission of air towards a passenger compartment and provided with a series of slats (5), wherein each slat (5) comprises a most visible part (6) or part closest to the passenger compartment, **characterised in that** said front (3) comprises at least one batten (4), where each batten (4) is designed to cover at least the most visible part (6) of at least one slat (5) substantially along all of said most visible part (6).

8. Front (3) for a ventilator (2) for the emission of air towards a passenger compartment, in accordance with claim 7, **characterised in that** the battens (4) have a form that is adapted to the form of the most visible part (6) of the slats (5).

9. Front (3) for a ventilator (2) for the emission of air towards a passenger compartment, in accordance with claim 7, **characterised in that** the battens (4) of the front (3) are decorated in the same way as the rest of the front (3).

10. Front (3) for a ventilator (2) for the emission of air towards a passenger compartment, in accordance with claim 7, **characterised in that** the battens (4) are horizontal.

11. Front (3) for a ventilator (2) for the emission of air towards a passenger compartment, in accordance with claim 7, **characterised in that** the battens (4) are vertical.

12. Front (3) for a ventilator (2) for the emission of air towards a passenger compartment, in accordance with claim 7, **characterised in that** the battens (4) are neither horizontal nor vertical.
